Europäisches Patentamt

European Patent Office

Office européen des brevets

(11) Veröffentlichungsnummer: **0 158 689**

**A1**

(12) # EUROPÄISCHE PATENTANMELDUNG

(21) Anmeldenummer: **84104346.6**

(22) Anmeldetag: **17.04.84**

(51) Int. Cl.⁴: **F 27 B 1/18**
**C 10 K 1/00, B 01 D 53/34**

(43) Veröffentlichungstag der Anmeldung:
**23.10.85 Patentblatt 85/43**

(84) Benannte Vertragsstaaten:
**FR GB IT**

(71) Anmelder: **Dr. Küttner GmbH & Co. KG**
**Bismarckstrasse 67**
**D-4300 Essen 1(DE)**

(71) Anmelder: **Heinrich Lühr Staubtechnik GmbH & Co. KG**

**D-3060 Stadthagen(DE)**

(72) Erfinder: **Rachner, Hans-Günther, Dr.**
**Berchemer Weg 8**
**D-4300 Essen 18(DE)**

(72) Erfinder: **Margraf, Adolf**
**Am Schleplingsbach 46**
**D-3060 Stadthagen(DE)**

(74) Vertreter: **Hoormann, Walter, Dr. et al,**
**FORRESTER & BOEHMERT Widenmayerstrasse 4/I**
**D-8000 München 22(DE)**

(54) **Verfahren und Einrichtung zur Gichtgasentschwefelung eines Heisswind-Kupolofens.**

(57) Verfahren zum Entschwefeln des Gichtgases eines mit trockener Gaswirtschaft betriebenen Heißwind-Kupolofens (1), bei dem das warme, ungereinigte Gichtgas in einer dem Ofen unmittelbar nachgeordnete, mit Verbrennungsluft beschickten Brennkammer (16) verbrannt wird, wobei ein pulverförmiges Entschwefelungsmittel (18) in die Brennkammer (16) eingegeben wird.

Croydon Printing Company Ltd.

0158689

FB 761
17. April 1984

Dr. Küttner GmbH & Co. KG, Bismarckstr. 67,
4300 Essen 1 .

-----------------------------------------------------

Verfahren und Einrichtung zur Gichtgasentschwefelung
eines Heißwind-Kupolofens

-----------------------------------------------------

Die Erfindung betrifft ein Verfahren zum Entschwefeln
des Gichtgases eines mit trockner Gaswirtschaft betriebenen Heißwind-Kupolofens bei dem das warme,
ungereinigte Gichtgas in einer dem Ofen unmittelbar
nachgeordneten, mit Verbrennungsluft beschickten
Brennkammer verbrannt wird.

Die Erfindung betrifft weiterhin eine Einrichtung zum
Entschwefeln des Gichtgases eines mit trockner Gas-

512

wirtschaft betriebenen Heißwind-Kupolofens, der eine unterhalb seiner Begichtungsöffnung angeordnete Ringkammer aufweist, aus welcher das warme, ungereinigte Gichtgas in eine außerhalb des Ofens angeordnete Brennkammer zu leiten und in dieser zusammen mit der Brennkammer zugeführter Verbrennungsluft zu verbrennen ist.

Bei dem in seinem grundsätzlichen Aufbau bereits seit langem bekannten Kupolofen handelt es sich um das gebräuchlichste und damit dominierende Schmelzaggregat zur Herstellung von Gußeisen, Temperguß etc. in Gießereien.

Man unterscheidet prinzipiell zwischen dem sog. Kaltwind-Kupolofen, bei dem aus dem sog. Windring über am Umfang des Kupolofens verteilte Düsen Wind(Luft) in den unteren Abschnitt des Kupolofens eingeleitet wird, und dem prinzipiell gleich aufgebauten Heißwind-Kupolofen, dessen Wind vor der Einleitung in den Kupolofen erwärmt wird.

Ein Kupolofen besteht in aller Regel aus einem zylindrischen, vertikalen Ofenschacht, in welchen als sog. Eisenträger z.B. Roheisenmasseln, Stahlschrott, Gußbruch und eigener Kreislauf sowie als Brennstoff verhältnismäßig grobstückiger Koks und als Schlackebildner Kalkstein eingesetzt werden. Die Verbrennungsluft zum Verbrennen des im Ofenschacht befindlichen Kokses wird üblicherweise durch mehrere radiale Öffnungen in der Ofenwand in den Ofenschacht eingeblasen. Der verbrennende Koks erwärmt, schmilzt und überhitzt jeweils die in seiner Nachbarschaft befindlichen Eisenträger. Das flüssige Eisen und die Schlacke laufen schließlich aus einem gemeinsamen oder aber auch aus getrennten sog.
Siphons aus dem Ofen aus, während das entstehende
Gichtgas abgesaugt, verbrannt und ggf. zur Vorwärmung
des Windes verwendet wird, wobei insbesondere bei
größeren modernen Schmelzanlagen vor der Verbrennung
noch eine Reinigung des Gichtgases erfolgt.

Im Hinblick auf die hohen Energiekosten ist bei der
Energiebilanz eines Kupolofens heutzutage eine optimale
Ausnutzung der dem Ofen mit dem Koks zugeführten Energie
anzustreben. Demgemäß wird eine weitgehende Verbrennung
des im Koks enthaltenen Kohlenstoffs zu Kohlendioxid
und eine weitgehende Wärmeübertragung der fühlbaren Wärme
des Gichtgases an die chargierten Einsatzstoffe gewünscht.

Einer optimalen Ausnutzung der dem Kupolofen mit dem
Koks zugeführten Energie sind indes metallurgische
Grenzen gesetzt. Denn der Abbrand der Legierungselemente
nimmt mit der Oxidation der Eisenträger im oberen Abschnitt des Ofenschachtes zu. Daher ist ein Mindestgehalt unvollständig verbrannten Kohlenstoffs in Form
von Kohlenmonoxid zur Aufrechterhaltung einer reduzierenden Ofenatmosphäre erforderlich.

Es ist daher von Fall zu Fall ein wirtschaftliches
Optimum zu finden, bei dem die Summe der aufzuwendenden
Kosten für den Koks und die Legierungsstoffe möglichst
klein ist.

Das in zahlreichen Veröffentlichungen der einschlägigen
Fachwelt zum Ausdruck kommende allgemeine Vorurteil
gegen eine Beaufschlagung eines Röhren-Rekuperators
o.dgl. mit ungereinigten verbrannten Gichtgasen hat

0158689

- 4 -

dazu geführt, daß insbesondere bei größeren Kupolofen-
Schmelzanlagen mit Rekuperation praktisch ausschließlich Naßentstaubungseinrichtungen verwendet worden
sind, wobei demgemäß erst anschließend die gereinigten,
bei der Naßentstaubung abgekühlten Gichtgase verbrannt
werden. Derartige Naßentstaubungseinrichtungen bestehen
aus einem sog. auch als Vorwäscher dienenden Sättiger,
in dem das Gichtgas mit soviel Wasser besprüht wird,
daß es vollständig mit Wasserdampf gesättigt ist, wobei
der größere Anteil der leicht benetzbaren Staubpartikel
mit dem überschüssigen Wasser ausgetragen und einem
nachgeordneten Feinwäscher zugeführt wird, in welchem
die feinen Staubpartikel mit Wassertropfen so koagulieren, daß die staubbeladenen Tropfen schließlich
anschließend in einem Tropfenabscheider ausgeschieden
werden können. Das in dem Sättiger und dem sich daran
anschließenden sog. Desintegrator gereinigte und in
dem Tropfenabscheider getrocknete Gichtgas wird anschließend mit dem Rauchgas vorgewärmt, damit in einer
anschließenden Brennkammer eine sichere Zündung des
relativ armen Gichtgases sicher erfolgt. Das Rauchgas
wird sodann anschließend durch einen Rekuperator geleitet und schließlich zur Vorwärmung des Gichtgases
durch einen Gasvorwärmer geführt.

Es sind auch Heißwind-Kupolofen bekannt, bei denen
anstelle eines Desintegrators ein Hochleistungs-
Venturiwäscher eingesetzt worden ist. Bei diesen bekannten Anlagen entspricht die Gaswirtschaft ihrem Aufbau im übrigen im wesentlichen der vorstehend beschriebenen

Die mit nasser Gaswirtschaft betriebenen Heißwind-
Kupolöfen sind aber in mehrfacher Hinsicht unbefriedigend.

- 5 -

Zunächst einmal ist festzustellen, daß der Staubgehalt
des gereinigten Gases beachtlich schlechter ist als
bei Verwendung eines Tuchfilters. Es kommt hinzu, daß
der Energieverbrauch für die Gasreinigung erheblich
höher ist als bei trockener Gaswirtschaft. Weiterhin
sind die Möglichkeiten der Wärmerückgewinnung beschränkter; und schließlich ist die Unterhaltung einer
Wasserwirtschaft schon als solche an sich unerwünscht.

Diese und andere Nachteile werden bei einer trockenen
Gaswirtschaft vermieden, bei welcher das Gichtgas
nach dem Absaugen aus dem Ofenschacht zunächst einmal
in eine Brennkammer geleitet wird, wobei das Rauchgas
dann zur Abhitzeverwertung durch Wärmetauscher strömt
und Heißwind und/oder Heißwasser und/oder Warmluft erzeugt. Das im Wärmetauscher abgekühlte Gichtgas wird
dann erst anschließend durch einen Trockenfilter gereinigt.

Trotz dieser offensichtlichen Vorteile einer trockenen
Gaswirtschaft gegenüber einem nassen Gassystem sind in
den vergangenen Jahren fast ausnahmslos nasse Gasreinigungs-und Verwertungssysteme gebaut worden. Dieses liegt
u.a. insbesondere an den Schwierigkeiten, die mit der
Verschmutzung und Verkrustung der Rohrbündel im Rekuperator
befürchtet wurden, und nicht zuletzt daran, weil es unmöglich erschien, die steigenden Ansprüche an die Entschwefelung des Rauchgases zu verwirklichen.

Der vorliegenden Erfindung liegt demgemäß die Aufgabe
zugrunde, die bekannten Arbeitsverfahren und Einrichtungen der eingangs beschriebenen Gattung unter Vermeidung ihrer Nachteile zu verbessern.

Als Lösung des verfahrensmäßigen Teils dieser Aufgabe ist erfindungsgemäß vorgesehen, daß ein pulverförmiges Entschwefelungsmittel - zur trockenen Absorption von $SO_2$ und $SO_3$ - in die Brennkammer eingegeben wird.

Gemäß einer bevorzugten Ausgestaltung der vorliegenden Erfindung hat es sich als vorteilhaft erwiesen, wenn das pulverförmige Entschwefelungsmittel in den im oberen Abschnitt der Brennkammer befindlichen Hochtemperaturbereich der Brennkammer eingegeben wird, wo Temperaturen in der Größenordnung von 700 bis 1000$^o$C bestehen, wobei es sich als besonders zweckmäßig herausgestellt hat, wenn das Entschwefelungsmittel mit einem Träger in die Brennkammer eingeblasen wird. Bei diesem Träger handelt es sich bevorzugt um Luft (selbstverständlich niedrigerer Temperatur), so daß das Rauchgas mit dem eingeblasenen Gut, also der Trägerluft und dem Entschwefelungsmittel, hierbei gekühlt wird.

Die Menge des vorzugsweise aus Luft bestehenden gasförmigen Trägers für das Entschwefelungsmittel wird bevorzugt so gesteuert, daß die Austrittstemperatur aus der Brennkammer - also vor dem nachgeschalteten Rekuperator - einem vorgegebenen Wert entspricht, der bevorzugt in einem Bereich von etwa 700 bis 800$^o$C liegt.

Der sich auf die Einrichtung beziehende Aufgabenteil wird erfindungsgemäß dadurch gelöst, daß der Brennkammer eine Zugabevorrichtung zugeordnet ist, mittels welcher das pulverförmige Entschwefelungsmittel in die Brennkammer einzugeben ist.

Weitere bevorzugte Ausgestaltungen der vorliegenden Erfindung sind in den Ansprüchen beschrieben.

Die Erfindung ist nachfolgend unter Bezugnahme auf eine Zeichnung weiter erläutert.

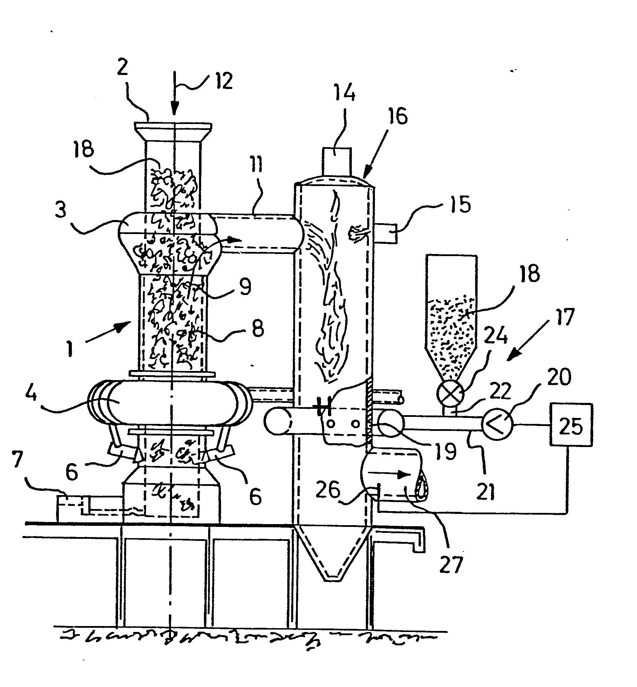

Die Zeichnung zeigt eine vereinfachte, schematisierte Darstellung eines Heißwind-Kupolofens 1, der eine Begichtungsöffnung 2, eine unterhalb der Begichtungsöffnung 2 angeordnete Ringkammer 3 zum Sammeln des aufsteigenden Gichtgases, einen Windring 4 mit Düsen 6 sowie eine Abstichöffnung 7 aufweist.

Der Ofenschacht 8 ist im wesentlichen zylindrisch ausgebildet und verläuft vertikal. Das Gichtgas steigt gemäß dem Pfeil 9 im Ofenschacht 8 auf und gelangt aus diesem bzw. der Ringkammer 3 des Ofens 1 über eine Verbindungsleitung 11 in eine dem Kupolofen 1 unmittelbar nachgeordnete Brennkammer 16.

Gemäß dem Pfeil 12 gelangt von oben her (Falsch-)Luft in den Ofen 1, die sich z.T. mit dem Gichtgas vermischt.

Die Brennkammer 16 weist an ihrem oberen Ende einen Anfahrbrenner 14 und seitlich an ihrem oberen Abschnitt einen Stützbrenner 15 auf.

Außerdem ist der Brennkammer 16 eine im ganzen mit 17 bezeichnete Zugabevorrichtung zugeordnet, mittels welcher pulverförmiges Entschwefelungsmittel 18 (bei dem es sich beispielsweise um Kalkstaub handeln kann) in die Brennkammer einzugeben ist. Der Einlaß 19 für das von der Zugabevorrichtung 10 einzugebende Entschwefelungsmittel 18 ist im Hochtemperaturabschnitt H der Brennkammer 16 angeordnet, in dem die Temperatur
bei dem dargestellten Ausführungsbeispiel 750°C beträgt.

Die Zugabevorrichtung 17 weist ein Gebläse 20 auf, dessen
Druckstutzen 21 einerseits mit dem Auslaß 22 eines
Vorratsbehälters 23 für Entschwefelungsmittel 18 und
andererseits mit dem Einlaß 19 verbunden ist. Die
Saugseite des Gebläses 20 ist mit Luft beaufschlagt.

Der Auslaß 22 des Vorratsbehälters 23 ist mit einer
Dosiervorrichtung 24 versehen, bei welcher es sich bei
dem dargestellten Ausführungsbeispiel um eine Zellenradschleuse handelt, mittels welcher pulverförmiges
Material dem von dem Gebläse 20 erzeugten Träger-Luftstrom zuzugeben ist. Eine mit dem Gebläse 20 zusammenwirkende Steuereinrichtung 25, der von einem Temperaturfühler 26 die Austrittstemperatur des aus der Brennkammer 16 austretenden und in die zu dem in der
Zeichnung nicht dargestellten Rekuperators führende
Leitung 27 zugeführt ist, steuert die zeitlich zugegebene
Luftmenge so, daß die Austrittstemperatur des aus der
Brennkammer 16 ausgetretenen Gases einen vorgegebenen
Wert annimmt, der bei dem dargestellten Ausführungsbeispiel 750°C beträgt.

Mit der vorliegenden Erfindung ist es gelungen, bei der
aus den weiter oben angegebenen Gründen gegenüber einer
nassen Gaswirtschaft vorteilhafteren trockenen Gaswirtschaft auf die trockene Gaswirtschaft angepaßter,
steuerbarer Weise überraschend einfach zu lösen, weil
sich gezeigt hat, daß der Restschwefelgehalt etwa um
eine Größenordnung kleiner ist als erwartet, und damit
eine geradezu hervorragende Problemlösung erkennen läßt.

0158689

FB 761

17. April 1984

BEZUGSZEICHENLISTE
(LIST OF REFERENCE NUMERALS)

| | |
|---|---|
| 1 | Heißwind-Kupolofen |
| 2 | Begichtungsöffnung (von 1) |
| 3 | Ringkammer |
| 4 | Windring |
| 5 | - |
| 6 | Düsen (von 4) |
| 7 | Abstichöffnung |
| 8 | Ofenschacht |
| 9 | Pfeil (Gichtgas) |
| 10 | - |
| 11 | Verbindungsleitung |
| 12 | Pfeil (Luft) |
| 13 | - |
| 14 | Anfahrbrenner |
| 15 | Stützbrenner |
| 16 | Brennkammer |
| 17 | Zugabevorrichtung |
| 18 | Entschwefelungsmittel |
| 19 | Einlaß (für 18) |
| 20 | Gebläse |
| 21 | Druckstutzen |
| 22 | Auslaß (von 23) |
| 23 | Vorratsbehälter (für 18) |
| 24 | Dosiervorrichtung |
| 25 | Steuereinrichtung |
| 26 | Temperaturfühler |
| 27 | Leitung |
| 28 | |
| 29 | |
| 30 | |

FB 761
17. April 1984

# A n s p r ü c h e

1. Verfahren zum Entschwefeln des Gichtgases eines mit trockener Gaswirtschaft betriebenen Heißwind-Kupolofens, bei dem das warme, ungereinigte Gichtgas in einer dem Ofen unmittelbar nachgeordneten, mit Verbrennungsluft beschickten Brennkammer verbrannt wird, dadurch gekennzeichnet, daß ein pulverförmiges Entschwefelungsmittel in die Brennkammer eingegeben wird.

2. Verfahren nach Anspruch 1, dadurch gekennzeichnet, daß das Entschwefelungsmittel in den im oberen Abschnitt der Brennkammer befindlichen Hochtemperaturbereich der Brennkammer eingegeben wird.

3. Verfahren nach Anspruch 1 oder 2, dadurch gekennzeichnet, daß das Entschwefelungsmittel in die Brennkammer eingeblasen wird.

4. Verfahren nach Anspruch 3, dadurch gekennzeichnet, daß das Entschwefelungsmittel mittels eines Trägergases in die Brennkammer eingeblasen wird.

512

5. Verfahren nach Anspruch 4, dadurch gekennzeichnet, daß das Entschwefelungsmittel mit Luft in die Brennkammer eingeblasen wird.

6. Verfahren nach einem oder mehreren der Ansprüche 3 bis 5, dadurch gekennzeichnet, daß das Rauchgas mit dem eingeblasenen Gut gekühlt wird.

7. Verfahren nach einem oder mehreren der Ansprüche 4 bis 6, dadurch gekennzeichnet, daß die Menge des gasförmigen Trägers für das Entschwefelungsmittel so gesteuert wird, daß die Austrittstemperatur aus der Brennkammer gleich einem vorgegebenen Wert ist.

8. Verfahren nach Anspruch 7, dadurch gekennzeichnet, daß die Menge des eingeblasenen Gutes so gesteuert wird, daß die Austrittstemperatur aus der Brennkammer in einem Bereich von etwa 700 bis 800°C liegt.

9. Verfahren nach Anspruch 8, dadurch gekennzeichnet, daß die Menge des eingeblasenen Gutes so gesteuert wird, daß die Austrittstemperatur aus der Brennkammer in einem Bereich von etwa 720 bis 750°C liegt.

10. Einrichtung zum Entschwefeln des Gichtgases eines mit trockener Gaswirtschaft betriebenen Heißwind-Kupolofens, der eine unterhalb seiner Begichtungsöffnung angeordnete Ringkammer aufweist, aus welcher das warme, ungereinigte Gichtgas in eine außerhalb des Ofens angeordnete Brennkammer zu leiten und in dieser zusammen mit der Brennkammer zugeführter Verbrennungsluft zu verbrennen ist, zur Durchführung des Verfahrens nach einem oder mehreren der vorhergehenden Ansprüche, dadurch gekennzeichnet, daß der Brennkammer (16) eine Zugabevorrichtung (17) zugeordnet ist, mittels welcher pulverförmiges Entschwefelungsmittel (18) in die Brennkammer (16) einzugeben ist.

11. Einrichtung nach Anspruch 10, dadurch gekennzeichnet, daß der Einlaß (19) für das von der Zugabevorrichtung (17) einzugebende Entschwefelungsmittel (18) im Hochtemperaturabschnitt (H) der Brennkammer (16) angeordnet ist.

12. Einrichtung nach Anspruch 10 oder 11, dadurch gekennzeichnet, daß die Zugabevorrichtung (17) ein Gebläse (20) aufweist, dessen Druckstutzen (21) einerseits mit dem Auslaß (22) eines Vorratsbehälters (23) für Entschwefelungsmittel (18) und andererseits mit dem Einlaß (19) verbunden ist.

13. Einrichtung nach Anspruch 12, dadurch gekennzeichnet, daß die Saugseite des Gebläses (20) mit Luft beaufschlagt ist.

14. Einrichtung nach Anspruch 12 oder 13, dadurch gekennzeichnet, daß dem Auslaß (22) des Vorratsbehälters (23) eine Dosiereinrichtung (24) zugeordnet ist.

15. Einrichtung nach einem oder mehreren der Ansprüche 10 bis 14, dadurch gekennzeichnet, daß eine Steuereinrichtung (25) vorgesehen ist, mittels welcher die Luftmenge so zu steuern ist, daß die Austrittstemperatur des aus der Brennkammer (16) austretenden Gases einen vorgegebenen Wert besitzt.

16. Einrichtung nach Anspruch 15, dadurch gekennzeichnet, daß die Austrittstemperatur auf etwa 700 bis 750$^{\circ}$ C zu steuern ist.

Europäisches
Patentamt

**EUROPÄISCHER RECHERCHENBERICHT**

**0158689**

Nummer der Anmeldung

EP 84 10 4346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-2 729 301 (R.A. EKSTROM) <br> * Ansprüche; Figuren * | 1,10 | F 27 B 1/18 <br> C 10 K 1/00 <br> B 01 D 53/34 |
| Y | DE-A-2 000 059 (STEIRISCHE MAGNESIT-INDUSTRIE) <br> * Anspruch 1; Seite 3 * | 1,2,4 | |
| A | FR-A-1 548 871 (THE LUMMUS CY) | | |

|  | RECHERCHIERTE SACHGEBIETE (Int. Cl.4) |
|---|---|
| | F 27 B <br> C 10 K <br> B 01 D |

Der vorliegende Recherchenbericht wurde für alle Patentansprüche erstellt.

| Recherchenort <br> DEN HAAG | Abschlußdatum der Recherche <br> 05-02-1985 | Prüfer <br> COULOMB J.C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82